# EUROPÄISCHE PATENTSCHRIFT

(11) **EP 0 620 904 B1**
(45) Veröffentlichungstag und Bekanntmachung des Hinweises auf die Patenterteilung: **24.04.1996**
(21) Anmeldenummer: 93902190.3
(22) Anmeldetag: 14.01.1993
(51) Int. Cl.: F16H 57/10, F16H 63/30, F16D 13/69

(54) **AUTOMATISCHES SCHALTGETRIEBE**
AUTOMATIC GEARBOX
BOITE DE VITESSES AUTOMATIQUE

(30) Priorität: 16.01.1992 DE 4200908
(43) Veröffentlichungstag der Anmeldung: 26.10.1994
(73) Patentinhaber: ZF FRIEDRICHSHAFEN Aktiengesellschaft, D-88038 Friedrichshafen (DE)
(72) Erfinder: SPINDLER, Gerhard, D-7994 Langenargen (DE); TIESLER, Peter, D-7993 Kressbronn (DE)
(86) Internationale Anmeldenummer: EP9300065
(87) Internationale Veröffentlichungsnummer: WO9314334

(56) Entgegenhaltungen:
- DE-A- 2 127 827
- DE-A- 3 705 052
- GB-A- 2 072 279
- US-A- 3 914 849
- H.J. Förster "Automatische Getriebe" 1991, S. 286,287,365.

## Beschreibung

Die Erfindung betrifft ein automatisches Schaltgetriebe nach der im Oberbegriff von Anspruch 1.

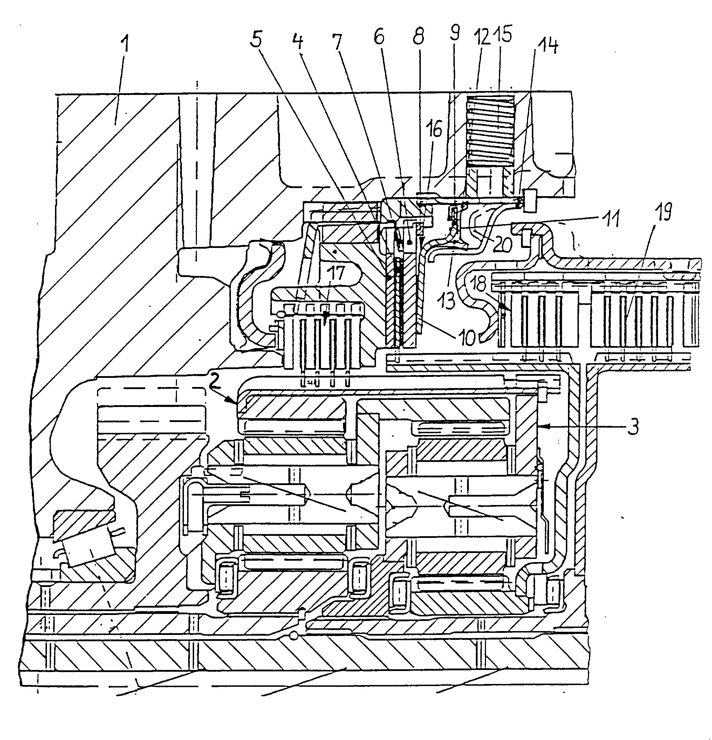

Aus dem Buch "Automatische Getriebe", Verfasser H. J. Förster, Springer-Verlag Berlin 1991, Seite 365, ist ein automatisches Getriebe bekannt. Hierbei zeigt das Bild 10.34 einen Planetensatz mit Freilauf, Kupplung und zwei Bremsen. Die erste Bremse hält das Sonnenrad im Schub fest und die zweite Bremse hält den Außenring eines Freilaufes fest. Die zweite Bremse weist hierbei nur eine einzige innere Belaglamelle auf. Im selben Konstruktionsbuch werden auf den Seiten 286 bis 287 die Verluste bei nicht betätigten Servoeinheiten behandelt. Dabei wird eine mechanische Trennung der Scheiben vorgeschlagen, die zum Beispiel mittels einer Schirmung der Belaglamellen gewährleistet wird. Nachteilig bei dieser Ausführung ist der hohe fertigungstechnische Aufwand zur Herstellung dieser Belaglamellen.

Aus der DE-A-3 705 052 ist eine Lamellenkupplung bekannt. Bei dieser Lamellenkupplung wird vorgeschlagen, daß eine separate Federeinrichtung die Belaglamellen trennt.

Die Erfindung hat zur Aufgabe, für eine Lamellenbremse eine einfachere konstruktive Lösung anzustreben.

Die Aufgabe wird erfindungsgemäß dadurch gelöst, daß eine separate federartige Einrichtung zwischen den beiden die Belaglamelle einschließenden Lamellen gespannt ist, die diese beiden Lamellen gegen die Schließeinrichtung des Bremskolbens auf Anschläge drückt.

Die erfindungsgemäße Lösung bietet den Vorteil, daß durch die separate federartige Einrichtung die Lamellen und die Belaglamelle sicher getrennt werden, so daß die Schleppmomentverluste verringert werden.

In einer Weiterbildung der Erfindung kann vorgesehen sein, daß ein Anschlag durch ein Sprengring gebildet ist. Hierzu wird man im allgemeinen den Anschlag für die Endlamelle durch den Sprengring vorsehen. Durch Variation der Sprengringdicke kann das Lüftspiel in der Bremse sehr genau eingestellt werden.

In einer vorteilhaften Ausgestaltung der Erfindung kann vorgesehen sein, daß der Kolben als Ringkörper, z. B. als Blechring, ausgebildet sein kann.

Der Blechring drückt dabei in üblicher Weise von außen her auf die Endlamelle, wobei er in vorteilhafter Weise auch bereits mit einer Dichtung zur Abdichtung des Kolbenraumes versehen sein kann.

Eine sehr vorteilhafte und nicht naheliegende Weiterbildung der Erfindung besteht darin, daß der innere Teil des Bremskolbens federelastisch ausgebildet ist. Eine Federelastizität kann z. B. durch eine tellerfederartige Ausbildung des inneren Teiles des als Blechring ausgebildeten Bremskolbens erreicht werden.

Neben einer einfachen Ausgestaltung des Bremskolbens hat diese Ausbildung den Vorteil, daß der Bremskolben gleichzeitig als Dämpfungselement für die Schaltung genutzt werden kann. Durch seine elastische Nachgiebigkeit wird eine Dämpfung von Druckspitzen während der Schaltung erreicht bei einem gleichzeitigen sehr kurzen Aufbau im Belagbereich.

Praktisch übernimmt der Bremskolben damit zusätzlich auch die Funktion einer Federlamelle.

In einer einfachen Ausgestaltung der Erfindung kann vorgesehen sein, daß der Bremskolben in einem Zylinder des Gehäuses geführt ist, wobei der Zylinder mit einer Bohrung zur Druckmittelzufuhr versehen ist.

Nachfolgend ist ein Ausführungsbeispiel der Erfindung anhand der Zeichnung prinzipmäßig beschrieben.

Da das erfindungsgemäße Schaltgetriebe grundsätzlich von bekannter Bauart ist, wird nachfolgend nur auf die für die Erfindung wesentlichen Teile näher eingegangen.

Das automatische Schaltgetriebe ist in einem Gehäuse 1 angeordnet und weist zwei nebeneinanderliegende Planetengetriebe 2 und 3 auf. Über den beiden Planetengetrieben 2 und 3 befinden sich Bremsen 16 und 17 sowie die Kupplung 18. Neben der Kupplung 18 ist eine weitere Kupplung 19 angeordnet. Während in üblicher Weise bei den beiden Kupplungen 18 und 19 zwei rotierende Teile vorhanden sind, stützt sich bei den Bremsen 16 und 17 jeweils ein Teil am Gehäuse 1 ab. Grundsätzlich haben jedoch die Bremsen 16 und 17 und die Kupplungen 18 und 19 die gleichen Funktionen.

Die Bremse 16 weist nur eine einzige innere Belaglamelle 4 auf, die zwischen zwei Außenlamellen 5 und 6 angeordnet ist. Zwischen die beiden Außenlamellen 5 und 6 ist als federartige Einrichtung eine Tellerfeder 7 gespannt. Die Tellerfeder 7 drückt im Leerlauf die beiden Außenlamellen 5 und 6 nach außen und hält sie damit von der Innenlamelle 4 weg. Dabei kann ein genau definiertes Spiel eingehalten werden. Dabei dient ein Sprengring 8 als Anschlag. Der Sprengring 8 ist in dem Gehäuse 1 oder an einem mit dem Gehäuse verbundenen Teil befestigt, wobei seine Lage gegebenenfalls einstellbar ist.
Lüftspieleinstellung kann auch über Sprengringe unterschiedlicher Dicke erfolgen.

Durch einen Bremskolben 9 kann die Lamellenbremse 16 geschlossen werden. Der Bremskolben 9 ist als Blechring ausgebildet, wobei dessen inneres Teil 10 tellerfederartig ausgestaltet ist und an der Außenlamelle 6 anliegt. Der Bremskolben 9 ist mit einem Dichtelement 11 versehen, welches eine obere und untere Dichtlippe 12 bzw. 13 besitzt. Die Dichtung 11 kann an den Bremskolben 9 anvulkanisiert werden. Auf diese Weise ist eine Abdichtung des Bremskolbens 9 mit einem integrierten Dichtelement hergestellt. Der Bremskolben 9 ist in einem Zylinder 14 geführt, der als Blechzylinder ausgebildet und an dem Gehäuse 1 befestigt ist. Selbstverständlich kann im Bedarfsfalle jedoch auch der Zylinder in das Gehäuse 1 selbst eingeformt sein. Über eine Gehäusebohrung 15 kann der Kolbenraum 20 mit Druckmittel befüllt werden, um die Bremse zu aktivieren. In diesem Falle wird der Bremskolben 9 fest an die Außenlamelle 6 angedrückt, wodurch das Spiel unterbunden und die Belaglamelle 4 zur Abbremsung zwischen den beiden Außenlamellen 5 und 6 eingepreßt wird. Aufgrund der tellerfederartigen Ausbildung des inneren Teiles 10 des Bremskolbens 9 können Druckspitzen, die aus der Steuerung herrühren, während der Schaltung abgebaut werden.

Um unterschiedliche Gänge zu schaffen, werden in bekannter Weise die Bremsen 16 und 17 und die Kupplungen 18 und 19 entsprechend unterschiedlich geschaltet bzw. betätigt. Da dieses Funktionsprinzip allgemein bekannt ist und mit der Ausgestaltung der Bremse 16 direkt nichts zu tun hat, wird hierauf nicht näher eingegangen.

### Bezugszeichen

- 1: Gehäuse
- 2: Planetengetriebe
- 3: Planetengetriebe
- 4: Belaglamelle
- 5: Außenlamelle
- 6: Außenlamelle
- 7: Tellerfeder
- 8: Sprengring (Anschlag)
- 9: Bremskolben
- 10: innerer Teil des Bremskolbens
- 11: Dichtung
- 12: Dichtlippe
- 13: Dichtlippe
- 14: Zylinder
- 15: Gehäusebohrung
- 16: Bremse
- 17: Bremse
- 18: Kupplung
- 19: Kupplung
- 20: Kolbenraum

## Patentansprüche

1. Automatisches Schaltgetriebe mit Planetengetrieben (2, 3), mit Kupplungen (18, 19) und Bremsen (16, 17) der Lamellenbauweise, hierbei wenigstens eine Bremse (16) eine einzige Lamelle als Belaglamelle (4) zwischen zwei gegenüberliegenden Lamellen (5, 6) umfaßt, die Bremse (16) mittels eines Bremskolbens (9) betätigt wird, dadurch **gekennzeichnet**, daß eine separate federartige Einrichtung (7) zwischen den beiden die Belaglamelle (4) einschließenden Lamellen (5, 6) gespannt ist, die diese beiden Lamellen (5, 6) gegen die Schließeinrichtung des Bremskolbens (9) auf Anschläge (8) drückt.

2. Automatisches Schaltgetriebe nach Anspruch 1, dadurch **gekennzeichnet**, daß die Belaglamelle die Innenlamellen (4) und die beiden diese zwischen sich einschließenden Lamellen die Außenlamellen (5, 6) sind.

3. Automatisches Schaltgetriebe nach Anspruch 1, dadurch **gekennzeichnet**, daß die federartige Einrichtung als Tellerfeder (7) ausgebildet ist.

4. Automatisches Schaltgetriebe nach einem der Ansprüche 1 bis 3, dadurch **gekennzeichnet**, daß ein Anschlag durch einen Sprengring (8) gebildet ist.

5. Automatisches Schaltgetriebe nach einem der Ansprüche 1 bis 3, dadurch **gekennzeichnet**, daß der Bremskolben (9) als Ringkörper ausgebildet ist.

6. Automatisches Schaltgetriebe nach Anspruch 5, dadurch **gekennzeichnet**, daß der Bremskolben (9) als Blechring ausgebildet ist.

7. Automatisches Schaltgetriebe nach Anspruch 5 oder 6, dadurch **gekennzeichnet**, daß der Bremskolben (9) mit wenigstens einer Dichtung (11) versehen ist.

8. Automatisches Schaltgetriebe nach Anspruch 7, dadurch **gekennzeichnet**, daß die Dichtung (11) eine obere und eine untere Dichtlippe (12, 13) aufweist.

9. Automatisches Schaltgetriebe nach einem der Ansprüche 5 bis 8, dadurch **gekennzeichnet**, daß der innere Teil (10) des Bremskolbens (9) federelastisch ausgebildet ist.

10. Automatisches Schaltgetriebe nach Anspruch 9, dadurch **gekennzeichnet**, daß der innere Teil (10) des Bremskolbens (9) tellerfederartig ausgebildet ist.

11. Automatisches Schaltgetriebe nach einem der Ansprüche 1 bis 10, dadurch **gekennzeichnet**, daß der Bremskolben (9) in einem Zylinder (14) des Gehäuses geführt ist, wobei der Zylinder (14) mit einer Bohrung (15) zur Druckmittelzufuhr verbunden ist.

## Claims

1. Automatic control gear having planetary gearings (2, 3), having clutches (18, 19) and multiple-disc-type brakes (16, 17), of which at least one brake (16) comprises a single disc as a lining disc (4) between two opposing discs (5, 6) and the brake (16) is operated by means of a brake piston (9), characterized in that a separate spring-like device (7) is clamped between the two discs (5, 6) enclosing the lining disc (4) and presses said two discs (5, 6) towards the closing device of the brake piston (9) onto stops (8).

2. Automatic control gear according to claim 1, characterized in that the lining disc is the inner disc (4) and the two discs enclosing said disc between them are the outer discs (5, 6).

3. Automatic control gear according to claim 1, characterized in that the spring-like device takes the form of a cup spring (7).

4. Automatic control gear according to one of claims 1 to 3, characterized in that a stop is formed by a snap ring (8).

5. Automatic control gear according to one of claims 1 to 3, characterized in that the brake piston (9) takes the form of an annular body.

6. Automatic control gear according to claim 5, characterized in that the brake piston (9) takes the form of a sheet-metal ring.

7. Automatic control gear according to claim 5 or 6, characterized in that the brake piston (9) is provided with at least one seal (11).

8. Automatic control gear according to claim 7, characterized in that the seal (11) has an upper and a lower sealing lip (12, 13).

9. Automatic control gear according to one of claims 5 to 8, characterized in that the inner part (10) of the brake piston (9) is of a spring-elastic construction.

10. Automatic control gear according to claim 9, characterized in that the inner part (10) of the brake piston (9) is constructed in the manner of a cup spring.

11. Automatic control gear according to one of claims 1 to 10, characterized in that the brake piston (9) is guided in a cylinder (14) of the housing, the cylinder (14) being connected to a bore (15) for the supply of pressure medium.

## Revendications

1. Boîte de vitesses automatique avec engrenage planétaire (2, 3), avec embrayages (18, 19) et freins (16, 17) de construction lamellaire, comportant au moins un frein (16) comportant une lamelle unique de revêtement (4) disposée entre deux lamelles opposées (5, 6), le frein étant actionné au moyen d'un piston de freinage (9), **caractérisée** en ce qu'un dispositif à ressort (7) est monté entre les deux lamelles (5, 6) entre lesquelles est disposée la lamelle de revêtement (4), ce dispositif à ressort étant agencé pour pousser ces deux lamelles (5, 6) sur des butées (8) contre le dispositif de fermeture du piston de freinage (9).

2. Boîte de vitesses automatique selon la revendication 1, **caractérisée** en ce que la lamelle de revêtement est la lamelle intérieure (4), et en ce que les deux lamelles entre lesquelles est disposée cette dernière sont les lamelles extérieures (5, 6).

3. Boîte de vitesses automatique selon la revendication 1, **caractérisée** en ce que le dispositif à ressort est constitué par un ressort diaphragme (7).

4. Boîte de vitesses automatique selon l'une des revendications 1 à 3, **caractérisée** en ce qu'une butée est constituée par un anneau ressort (8).

5. Boîte de vitesses automatique selon l'une des revendications 1 à 3, **caractérisée** en ce que le piston de freinage (9) est constitué d'une pièce annulaire.

6. Boîte de vitesses automatique selon la revendication 5, **caractérisée** en ce que le piston de freinage (9) est une bague en tôle.

7. Boîte de vitesses automatique selon la revendication 5 ou 6, **caractérisée** en ce que le piston de freinage (9) est pourvu d'au moins un joint d'étanchéité (11).

8. Boîte de vitesses automatique selon la revendication 7, **caractérisée** en ce que le joint d'étanchéité (11) comporte une lèvre d'étanchéité supérieure et inférieure (12, 13).

9. Boîte de vitesses automatique selon l'une des revendications 5 à 8, **caractérisée** en ce que la partie intérieure (10) du piston de freinage (9) a des propriétés élastiques.

10. Boîte de vitesses automatique selon la revendication 9, **caractérisée** en ce que la partie intérieure (10) du piston de freinage (9) est constituée d'un ressort diaphragme.

11. Boîte de vitesses automatique selon l'une des revendications 1 à 10, **caractérisée** en ce que le piston de freinage (9) est guidé à l'intérieur du corps d'un vérin (14), ce vérin (14) étant pourvu d'un alésage (15) pour la connexion d'un dispositif d'alimentation en fluide sous pression.
